# EUROPEAN PATENT APPLICATION

(11) **EP 4 738 560 A1**
(43) Date of publication of application: **06.05.2026**
(21) Application number: 25203658.7
(22) Date of filing: 22.09.2025
(51) Int. Cl.: H01M 50/186, H01M 50/193, H01M 50/213, H01M 50/548, H01M 50/559, H01M 50/588, H01M 50/593, H01M 50/503, H01M 50/505, H01M 50/512, H01M 50/517, H01M 50/526, H01M 50/591, H01M 50/586, H01M 50/107

(54) **CELL ASSEMBLY, BATTERY MODULE AND BATTERY PACK**

(30) Priority: 16.10.2024 CN 202422506634 U
(71) Applicant: AESC Japan Ltd., Yokohama-shi, Kanagawa 220-0012 (JP)
(72) Inventor: WU, Changjun, Pudong New Area Shanghai, 201315 (CN); YANG, Xinwei, Pudong New Area Shanghai, 201315 (CN); CUI, Xin, Pudong New Area Shanghai, 201315 (CN); YUAN, Zhuchen, Pudong New Area Shanghai, 201315 (CN)
(74) Representative: Becker, Eberhard

(57) **Abstract**

A cell assembly, a battery module, and a battery pack are provided. The cell assembly includes a cell (100) including a cell body (110), where a first end surface (111) of the cell body (110) is arranged with an electrode post (120) protruding outward, and an insulating ring (130) is arranged between the first end surface (111) and the electrode post (120); and a sealed insulating unit (200) including a sealed insulating cover (210) sealingly connected between the first end surface (111) and the electrode post (120) and covering the insulating ring (130).

## Description

### BACKGROUND

### Technical Field

The disclosure relates to the field of power battery technology, and particularly, relates to a cell assembly, a battery module, and a battery pack.

### Description of Related Art

Typically, a cell (including a cylindrical cell and a prismatic cell) includes a housing for forming a cell body and an electrode post protruding from the housing. The housing may serve as a negative electrode of the cell, and the electrode post may serve as a positive electrode of the cell. In order to prevent short circuit between the positive electrode and the negative electrode of the cell, an insulating ring surrounding the electrode post is arranged between the electrode post and the housing.

When the cell undergoes thermal runaway, high-temperature gas inside the cell may be discharged outward from the position where the insulating ring is arranged, and safety hazards may thus occur.

### SUMMARY

In view of the above, the disclosure aims to provide a cell assembly, a battery module, and a battery pack capable of at least partially solving the problem of safety hazards in the battery pack caused by high-temperature gas discharged near an electrode post of a cell.

Based on the above purpose, a first aspect of the disclosure provides a cell assembly including a cell and a sealed insulating unit. The cell includes a cell body. A first end surface of the cell body is arranged with an electrode post protruding outward, and an insulating ring is arranged between the first end surface and the electrode post. The sealed insulating unit includes a sealed insulating cover sealingly connected between the first end surface and the electrode post and covering the insulating ring.

Optionally, the insulating ring is annular surrounding the electrode post and is embedded in the first end surface. In a radial direction of the insulating ring, the sealed insulating cover is sealingly connected to the cell at an inner side and an outer side of the insulating ring, so that the sealed insulating cover and the cell form a sealed space covering the insulating ring together.

Optionally, the sealed insulating cover is sealingly connected to the first end surface of the cell body to form a continuous and annular outer sealing region at the outer side of the insulating ring. The sealed insulating cover is sealingly connected to the electrode post to form a continuous and annular inner sealing region at the inner side of the insulating ring.

Optionally, an end portion of the electrode post protruding from the first end surface is defined as a top end of the electrode post. The sealed insulating cover is sealingly connected to the top end of the electrode post to form the inner sealing region.

Optionally, the sealed insulating cover is arranged with an avoidance through hole near the top end of the electrode post, and the top end of the electrode post is exposed through the avoidance through hole.

Optionally, an end portion of the sealed insulating cover near the first end surface is defined as a bottom end of the sealed insulating cover. The sealed insulating cover is arranged with a sealing flange along an outer edge circumference of the bottom end. Both the sealing flange and the bottom end of the sealed insulating cover are sealingly connected to the first end surface to form the outer sealing region.

Optionally, the sealed insulating cover is a high-temperature resistant structure.

Optionally, the sealed insulating cover is sealingly connected to the cell through a high-temperature resistant connection layer.

Optionally, the cell assembly includes at least two cells, and the sealed insulating unit includes at least two sealed insulating covers and further includes a connecting beam connected to at least two sealed insulating covers. The at least two sealed insulating covers and the at least two cells are arranged in one-to-one configuration.

Optionally, the connecting beam is connected to the first end surface of the cell body.

Optionally, the cell assembly further includes a current-collecting busbar. The electrode post is electrically connected to the current-collecting busbar. An insulating layer is connected to a side of the current-collecting busbar facing the cell body, and the sealed insulating cover is connected to the insulating layer.

Optionally, the insulating layer and the sealed insulating cover are configured as an integrally-formed structure.

Optionally, the cell includes a cylindrical cell.

Based on the same inventive concept, in the second aspect, the disclosure further provides a battery module including the cell assembly as described in the first aspect.

Based on the same inventive concept, in the third aspect, the disclosure further provides a battery pack including the cell assembly as described in the first aspect.

Based on the above, it can be seen that in the cell assembly, the battery module, and the battery pack provided by the disclosure, by sealingly connecting the sealed insulating cover onto the cell, an additional protective functional structure may be formed above the insulating ring. When the cell experiences thermal runaway, even if the high-temperature gas inside the cell body is discharged from the melted insulating ring, it is blocked by the sealed insulating cover. The high-temperature gas inside of the cell is thus prevented from being discharged outward from the first end surface where the electrode post is located, and the damage caused by the high-temperature gas to the electrode post and external circuits is thereby lowered.

### BRIEF DESCRIPTION OF THE DRAWINGS

In order to more clearly explain the technical solutions in the disclosure or related art, the drawings required in the description of the embodiments or related art are to be briefly introduced below. Obviously, the drawings described in the following paragraphs are merely embodiments of the disclosure. For a person having ordinary skill in the art, other drawings may be obtained based on these drawings without inventive labor.
FIG. 1 is a schematic perspective view of a cell according to an embodiment of the disclosure.
FIG. 2 is a schematic top view of the cell according to an embodiment of the disclosure.
FIG. 3 is a schematic partial view of a cell assembly according to an embodiment of the disclosure.
FIG. 4 is a schematic partial top view diagram of the cell assembly according to an embodiment of the disclosure.
FIG. 5 is a schematic cross-sectional view of a section A-A in FIG. 4.
FIG. 6 is a schematic partial exploded view of the cell assembly according to an embodiment of the disclosure.
FIG. 7 is a schematic view of a structure of a sealed insulating cover of the cell assembly according to an embodiment of the disclosure.
FIG. 8 is a partial schematic view of another structure of the cell assembly according to an embodiment of the disclosure.
FIG. 9 is a schematic partial front view of another structure of the cell assembly according to an embodiment of the disclosure.

### DESCRIPTION OF THE EMBODIMENTS

In order to make the purpose, technical solutions, and advantages of this application more clear and understandable, the disclosure is further described in detail in combination with specific embodiments and with reference to the accompanying drawings.

It should be noted that the relative arrangement of the components, the numerical expressions, and numerical values set forth in these embodiments do not limit the scope of the disclosure unless specifically stated otherwise.

Meanwhile, it should be understood that for ease of description, the dimensions of various parts shown in the drawings are not drawn according to actual proportional relationships.

The following description of at least one exemplary embodiment is merely illustrative in nature and is in no way intended to limit the disclosure and its application or uses in any way.

It should be noted that, unless otherwise defined, the technical terms or scientific terms used in the embodiments of the disclosure should be understood in the general sense by a person having ordinary skill in the art. The words "first", "second", and similar words used in the embodiments of the disclosure do not indicate any order, quantity, or importance, but are only used to distinguish different components. Words such as "include" or "contain" mean that the elements or objects appearing before the word cover the elements or objects listed after the word and their equivalents, without excluding other elements or objects. Words such as "connect" or "connected" are not limited to physical or mechanical connections, but may include electrical connections, whether direct or indirect. "Up", "down", "left", "right", etc. are only used to indicate relative positional relationships, and when the absolute position of the described object changes, the relative positional relationship may also change accordingly.

A cell 100 may include a cylindrical cell and/or a prismatic cell, and exemplary description is given by taking a cylindrical cell as an example.

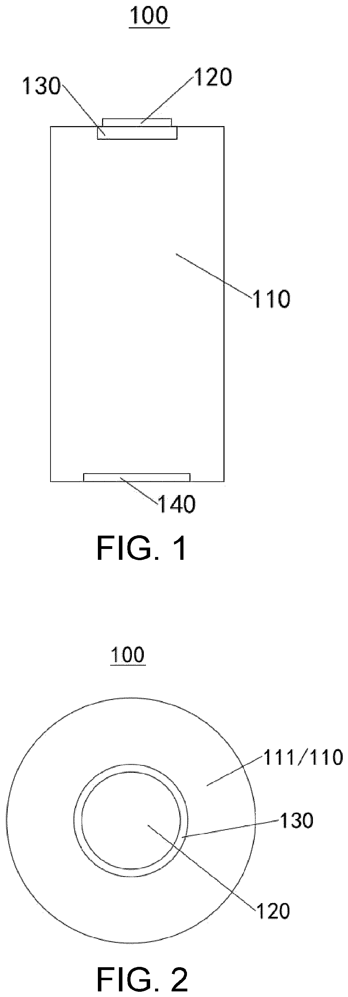

As shown in FIG. 1, FIG. 1 shows a schematic perspective view of the cell 100. The cell 100 may include a cylindrical cell body 110 including a housing and a bare cell installed within the housing. An electrode post 120 is arranged at a top end of the cell body 110. A portion of the electrode post 120 is located in an inner portion the housing to be electrically connected to the bare cell, and another portion extends out from the top end of the cell body 110.

As shown in FIG. 2, FIG. 2 shows a schematic top view of the cell 100. In order to maintain insulation between the electrode post 120 and the housing of the cell body 110, an insulating ring 130 (or referred to as an insulating pad) is arranged between the electrode post 120 and the housing. The insulating ring 130 surrounds the electrode post 120 and separates the electrode post 120 and the housing in a circumferential direction of the electrode post 120.

Exemplarily, as shown in FIG. 2, the insulating ring 130 may be fitted against a circumferential outer wall of the electrode post 120.

Taking an application of the cell 100 in a battery pack as an example, the electrode posts 120 of a plurality of cells 100 in the battery pack may be connected to an integrated busbar (cells contact system (CCS)) cell together. When a single cell 100 experiences thermal runaway, the high-temperature gas generated inside the housing carries fine particles that need to be discharged from the housing. If the high-temperature gas and the fine particles enter a connection region between the electrode post 120 and the integrated busbar, arcing may occur at a top portion of the cell body 110, which may cause other normal cells 100 to also experience thermal runaway, and thermal propagation may thus occur.

In order to improve the above safety hazards, as shown in FIG. 1, an explosion-proof valve 140 is arranged on a bottom portion of the cell body 110. When the cell 100 experiences thermal runaway, the high-temperature gas generated inside may drive the explosion-proof valve 140 to open, so that the high-temperature gas is discharged from the bottom portion of the cell body 110. The electrode post 120 on the top portion of cell body 110 is thus protected from adverse effects, so the cell 100 has a a thermal-electrical separation structure.

However, the Applicant's research has found that when the cell 100 experiences thermal runaway, the insulating ring 130 between the electrode post 120 and the housing has a risk of melting due to heat. After the insulating ring 130 is melted, a gap communicating with the inner portion of the housing may appear at the position where the insulating ring 130 was originally located, and the high-temperature gas inside the housing may thus be discharged from the top portion of the cell body 110 through the gap, and the above safety hazards may thus occur.

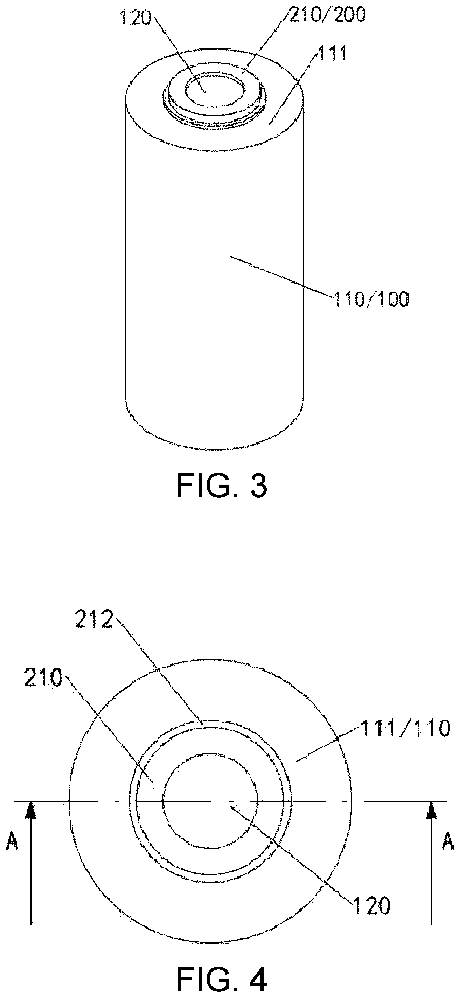

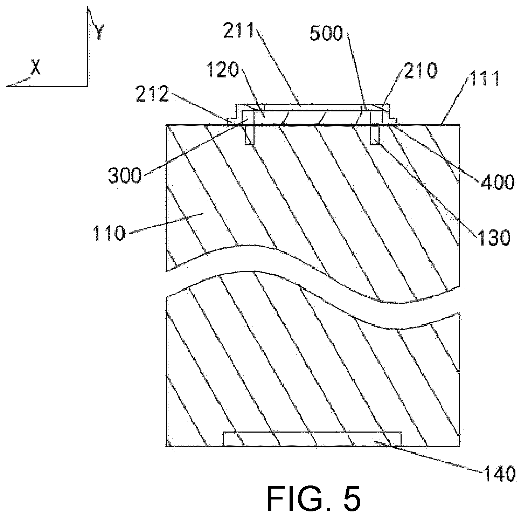

In order to solve the above problems, as shown in FIG. 3, FIG. 3 shows a schematic partial view of a cell assembly. The cell assembly provided by this embodiment includes the cell 100 and a sealed insulating unit 200. The cell 100 includes the cell body 110, and the electrode post 120 protruding outward is arranged on a first end surface 111 of the cell body 110. As shown in FIG. 4, FIG. 4 shows a schematic partial top view of the cell assembly. The sealed insulating unit 200 includes a sealed insulating cover 210 sealingly connected between the first end surface 111 and the electrode post 120. As shown in FIG. 5, FIG. 5 shows a schematic cross-sectional view of a section A-A in FIG. 4. The sealed insulating cover 210 covers the insulating ring 130.

Exemplarily, the sealed insulating cover 210 may be an integrally-formed structure to ensure its own sealing performance.

Exemplarily, the first end surface 111 may be a top portion surface of the cell body 110.

Exemplarily, the sealing connection between the sealed insulating cover 210 and the cell 100 may be implemented through sealing adhesive connection or other methods.

Exemplarily, the sealed insulating cover 210 may be sealingly connected to the first end surface 111 or may be sealingly connected to the electrode post 120. Since a material of the sealed insulating cover 210 is an insulating material, even if the sealed insulating cover 210 is connected to both the cell body 110 and the electrode post 120, it may not cause short circuit of the cell 100.

The sealed insulating cover 210 is located above the first end surface 111 and covers the insulating ring 130, so that an additional protective functional structure is formed above the insulating ring 130. When the cell 100 experiences thermal runaway, even if the insulating ring 130 is melted, the sealed insulating cover 210 may also block the high-temperature gas overflowing from the insulating ring 130 and may prevent the electrode post 120 from flying outward, so as to lower the impact of the high-temperature gas on the electrical connection between the electrode post 120 and external circuits.

In the cell assembly provided by the embodiments of the disclosure, by sealingly connecting the sealed insulating cover 210 onto the cell 100, an additional protective functional structure may be formed above the insulating ring 130. When the cell 100 experiences thermal runaway, even if the high-temperature gas inside the cell body 110 is discharged from the melted insulating ring 130, it may still be blocked by the sealed insulating cover 210. The high-temperature gas inside of the cell 100 is thus prevented from being discharged outward from the first end surface 111 where the electrode post 120 is located, and the damage caused by the high-temperature gas to the electrode post 120 and external circuits is thereby lowered.

As shown in FIG. 2, the insulating ring 130 is annular surrounding the electrode post 120 and is embedded in the first end surface 111. As shown in FIG. 5, in a radial direction (e.g., X direction in FIG. 5) of the insulating ring 130, the sealed insulating cover 210 is sealingly connected to the cell 100 at an inner side and an outer side of the insulating ring 130, so that the sealed insulating cover 210 and the cell 100 form a sealed space 300 covering the insulating ring 130 together.

The sealed insulating cover 210 spans across the insulating ring 130 and is sealingly connected to the cell 100 at both inner and outer sides of the insulating ring 130, so as to completely cover the insulating ring 130 and form the sealed space 300 above the insulating ring 130. When the insulating ring 130 is melted and the high-temperature gas inside the cell body 110 is discharged from the original position of the insulating ring 130, the sealed insulating cover 210 may confine the high-temperature gas within the sealed space 300, so that the high-temperature gas is further prevented from being discharged outward, and the electrical connection between the electrode post 120 and external circuits is further protected.

As shown in FIG. 5, in some embodiments, the sealed insulating cover 210 is sealingly connected to the first end surface 111 of the cell body 110 to form a continuous and annular outer sealing region 400 at the outer side of the insulating ring 130. The sealed insulating cover 210 is sealingly connected to the electrode post 120 to form a continuous and annular inner sealing region 500 at the inner side of the insulating ring 130.

Exemplarily, the sealed insulating cover 210 may be sealingly connected to an end portion of the electrode post 120, the end portion of the electrode post 120 may have a relatively flat surface. The sealing connection between the sealed insulating cover 210 and the flat surface may ensure that the formed inner sealing region 500 has an improved sealing effect. Certainly, the sealed insulating cover 210 may also be sealingly connected to a circumferential sidewall of the electrode post 120 to reduce the obstruction of the sealed insulating cover 210 to the end portion of the electrode post 120. In this way, a relatively large blank region is reserved at the end portion of the electrode post 120, so the electrical connection between the electrode post 120 and external circuits is improved.

Exemplarily, based on a radial cross-sectional shape of the electrode post 120, the outer sealing region 400 and the inner sealing region 500 may be polygonal annular regions or may be circular annular regions.

Both the outer sealing region 400 and the inner sealing region 500 are continuous and end-to-end closed annular regions. In this way, a channel communicating the sealed space 300 with the outside is prevented from being formed in the radial direction of the electrode post 120, the high-temperature gas in the sealed space 300 is confined between the outer sealing region 400 and the inner sealing region 500, and the high-temperature gas is effectively prevented from being discharged through the gap between the sealed insulating cover 210 and the cell 100.

As shown in FIG. 5, in some embodiments, the end portion of the electrode post 120 protruding from the first end surface 111 is defined as a top end of the electrode post 120, and the sealed insulating cover 210 is sealingly connected to the top end of the electrode post 120 to form the inner sealing region 500.

Exemplarily, a center of the inner sealing region 500 coincides with a center of the top end of the electrode post 120, so as to ensure that the inner sealing region 500 is uniformly distributed around a periphery of the top end of the electrode post 120, and that the sealing performance at each position of the inner sealing region 500 is further ensured.

The sealing connection between the sealed insulating cover 210 and the electrode post 120 is illustrated by way of example through adhesive connection.

When a fluid adhesive is used, the top end of the electrode post 120 may have a relatively flat surface. After the fluid adhesive is applied to the top end of the electrode post 120, it may be better maintained at the application position. After the fluid adhesive is cured, the sealed insulating cover 210 and the electrode post 120 may have improved sealing performance.

Meanwhile, forming the inner sealing region 500 at the top end of the electrode post 120 may also control an area of the inner sealing region 500 by adjusting a diameter of a top end opening of the sealed insulating cover 210, so that the sealing effect inside the insulating ring 130 is improved and adjustment costs are lowered, which is favorable for mass production.

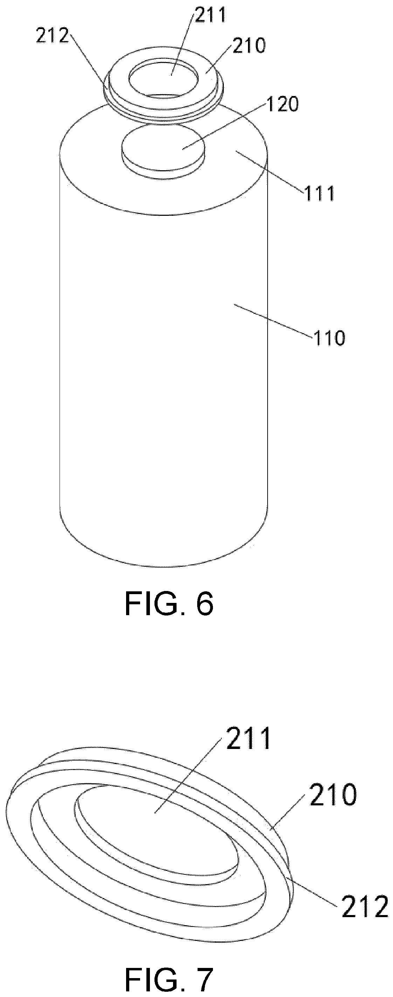

As shown in FIG. 6, FIG. 6 shows a schematic partial exploded view of the cell assembly. In some embodiments, the sealed insulating cover 210 is arranged with an avoidance through hole 211 near the top end of the electrode post 120, and the top end of the electrode post 120 is exposed through the avoidance through hole 211.

Exemplarily, a radial cross-sectional shape of the avoidance through hole 211 is the same as a shape of a top portion surface of the electrode post 120, and a diameter of the avoidance through hole 211 is less than a diameter of the top portion surface of the electrode post 120.

Exemplarily, an external circuit and an exposed portion of the top end of the electrode post 120 may achieve electrical connection through welding or conductive adhesive connection.

By arranging the avoidance through hole 211 on the sealed insulating cover 210, a portion of the top portion surface of the electrode post 120 may be exposed to facilitate electrical connection between the electrode post 120 and external circuits.

As shown in FIG. 5, in some embodiments, an end portion of the sealed insulating cover 210 near the first end surface 111 is defined as a bottom end of the sealed insulating cover 210. The sealed insulating cover 210 is arranged with a sealing flange 212 along an outer edge circumference along the bottom end. Both the sealing flange 212 and the bottom end of the sealed insulating cover 210 are sealingly connected to the first end surface 111 to form the outer sealing region 400.

Exemplarily, as shown in FIG. 7, FIG. 7 shows a schematic view of a structure of the sealed insulating cover 210. A bottom portion surface of the sealing flange 212 may be flush with a bottom end surface of the sealed insulating cover 210, so as to ensure that a gap distance between the sealing flange 212 and the first end surface 111 is the same as a gap distance between the bottom end of the sealed insulating cover 210 and the first end surface 111. In this way, when the sealed insulating cover 210 is sealingly connected to the first end surface 111, a structure layer with a relatively uniform thickness and favorable sealing performance may be formed.

Taking the structure shown in FIG. 5 and FIG. 6 as an example, the structure of the sealed insulating cover 210 is further described. The sealed insulating cover 210 includes an annular sheet structure located above the top portion of the electrode post 120, and the sheet structure is sealingly connected to the top portion of the electrode post 120 to form the inner sealing region 500. A cylindrical structure extending toward the first end surface 111 is arranged along an outer edge of the sheet structure, and an end portion of the cylindrical structure away from the sheet structure is the bottom end of the sealed insulating cover 210. In order to increase an area of the outer sealing region 400, in this embodiment, the sealing flange 212 is arranged along the outer edge of the bottom end of the sealed insulating cover 210. Since both the sealing flange 212 and the bottom end of the sealed insulating cover 210 are sealingly connected to the first end surface 111, the outer sealing region 400 includes not only a region covered by an orthogonal projection of the bottom end of the sealed insulating cover 210 on the first end surface 111, but also a region covered by the orthogonal projection of the sealing flange 212 on the first end surface 111. The outer sealing region 400 with a larger area helps to improve the sealing effect outside the insulating ring 130, so the high-temperature gas inside the sealed space 300 is prevented from being discharged outward.

In some embodiments, the sealed insulating cover 210 is sealingly connected to the cell 100 through a high-temperature resistant connection layer.

Exemplarily, the high-temperature resistant connection layer may be a structure layer formed by a high-temperature resistant solid adhesive or a structure layer formed after curing of the high-temperature resistant fluid adhesive.

In this embodiment, the outer sealing region 400 and the inner sealing region 500 form reliable sealing structures under normal temperature conditions. Further, when the sealed space 300 contains high-temperature gas or after the first end surface 111 heats up, the sealing structures of the outer sealing region 400 and the inner sealing region 500 may still exhibit favorable sealing effect in a high-temperature environment, so that high-temperature gas is prevented from being discharged outward from the sealed space 300.

In some embodiments, the sealed insulating cover 210 is a high-temperature resistant structure.

Exemplarily, the material of the sealed insulating cover 210 may be mica or high-temperature resistant silicone rubber, etc.

In addition to ensuring the sealing performance at the outer sealing region 400 and the inner sealing region 500, it is also necessary to ensure that the sealed insulating cover 210 itself may still maintain favorable sealing performance under a high-temperature environment. Therefore, in this embodiment, the sealed insulating cover 210 may be made of a high-temperature resistant material to avoid discharge of high-temperature gas from the sealed space 300 due to deformation or melting of the sealed insulating cover 210 in a high-temperature environment.

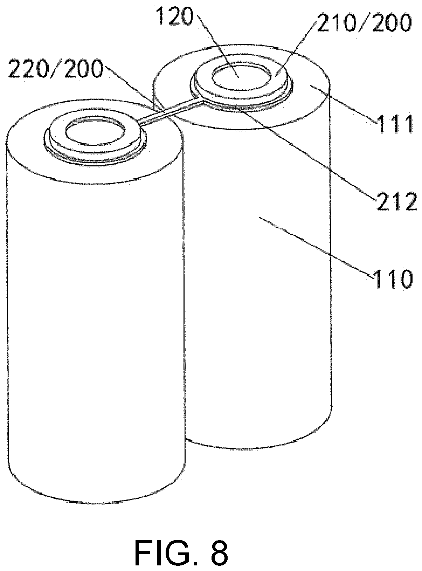

As shown in FIG. 8, FIG. 8 shows a partial schematic view of another structure of the cell assembly. In some embodiments, the cell assembly includes at least two cells 100, and the sealed insulating unit 200 further includes a connecting beam 220 connected to at least two sealed insulating covers 210. The at least two sealed insulating covers 210 and the at least two cells 100 are arranged in one-to-one configuration.

Exemplarily, a material of the connecting beam 220 may be the same as or different from the material of the sealed insulating cover 210.

Exemplarily, the connecting beam 220 and the sealed insulating cover 210 may be connected through integral-forming connection, welding, insertion connection, engagement connection, adhesive connection, or fastener connection, etc.

Exemplarily, the connecting beam 220 may be connected to at least one of a circumferential sidewall of the cylindrical structure of the sealed insulating cover 210, a circumferential sidewall of the sealing flange 212, and the top surface of the sealing flange 212.

With reference to FIG. 5, in the radial direction (e.g., X direction in FIG. 5) of the cell body 110, there is a slit (this slit is used to form the sealed space 300) between the sealed insulating cover 210 and the circumferential sidewall of the electrode post 120, so the sealed insulating cover 210 may be misaligned when being installed on the cell 100. If the sealed insulating cover 210 and the cell 100 are misaligned, it may cause a portion of the insulating ring 130 to be exposed from the sealed insulating cover 210, and sealing failure of the sealed insulating cover 210 may thus occur.

In order to avoid the above problems, it is necessary to ensure that the cell 100 and the sealed insulating cover 210 are maintained at predetermined positions. For the sealed insulating cover 210, in this embodiment, at least two sealed insulating covers 210 are connected into an integral unit through the connecting beam 220. Compared to multiple sealed insulating covers 210 being independently arranged, the connecting beam 220 may provide a certain positioning effect on the sealed insulating cover 210, which helps to avoid misaligned installation between the sealed insulating cover 210 and the cell 100 and ensures the sealing effect of the sealed insulating cover 210.

As shown in FIG. 8, in some embodiments, the connecting beam 220 is connected to the first end surface 111 of the cell body 110.

Exemplarily, the connection method between the connecting beam 220 and the first end surface 111 may be the same as the connection method between the sealed insulating cover 210 and the first end surface 111.

Exemplarily, in order to facilitate the connection between the connecting beam 220 and the first end surface 111, the connecting beam 220 may be connected to the circumferential sidewall of the sealing flange 212, so that the connecting beam 220 is close to the first end surface 111.

The connecting beam 220 is connected to the first end surface 111 of the cell body 110, and a force generated between the two helps to maintain a reliable sealing connection between the sealed insulating cover 210 and the first end surface 111.

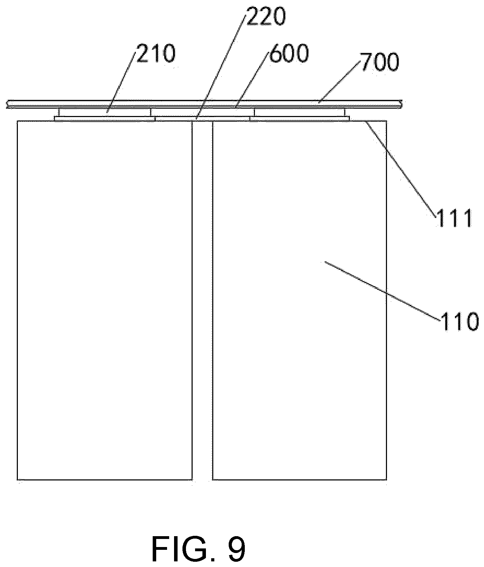

As shown in FIG. 9, FIG. 9 shows a schematic partial front view of another structure of the cell assembly. In some embodiments, the cell assembly further includes a current-collecting busbar 700, and the electrode post 120 is electrically connected to the current-collecting busbar 700. An insulating layer 600 is connected to a side of the current-collecting busbar 700 facing the cell body 110, and the sealed insulating cover 210 is connected to the insulating layer 600.

Exemplarily, the insulating layer 600 and the sealed insulating cover 210 are configured as an integrally-formed structure. Certainly, the sealed insulating cover 210 and the insulating layer 600 may also be connected through welding, insertion connection, engagement connection, adhesive connection, or fastener connection, etc.

Exemplarily, the current-collecting busbar 700 and the exposed portion at the top portion of the electrode post 120 may achieve electrical connection through welding or through a conductive adhesive.

It may be understood that since the current-collecting busbar 700 needs to be connected to multiple cells 100, an area of the current-collecting busbar 700 is relatively large. Correspondingly, a connection area between the insulating layer 600 and the current-collecting busbar 700 is also relatively large, so the connection reliability between the two is improved. Meanwhile, the current-collecting busbar 700 is connected to the electrode post 120 of each cell 100, so the stability of the relative position between the current-collecting busbar 700 and the electrode post 120 of each cell 100 is improved, and the probability of planar misalignment is low. Therefore, in this embodiment, the sealed insulating cover 210 and the insulating layer 600 are connected as an integral whole. When the stability of the relative position between the current-collecting busbar 700 and the cell 100 as well as between the current-collecting busbar 700 and the insulating layer 600 is improved, then the stability of the relative position between the sealed insulating cover 210 connected to the insulating layer 600 and the cell 100 connected to the current-collecting busbar 700 is also improved. This further ensures that a predetermined position is maintained between the cell 100 and the sealed insulating cover 210, misalignment between the cell 100 and the sealed insulating cover 210 is avoided, and the sealing performance of the sealed insulating cover 210 is thus ensured.

Based on the same inventive concept, in combination with the description of the cell assembly in the above embodiments, this embodiment provides a battery module having the corresponding technical effects of the cell assembly in the above embodiments, so description thereof is not repeated herein.

A battery module includes the cell assembly as described in the above embodiments.

Based on the same inventive concept, in combination with the description of the cell assembly in the above embodiments, this embodiment provides a battery pack having the corresponding technical effects of the cell assembly in the above embodiments, so description thereof is not repeated herein.

A battery pack includes the cell assembly as described in the above embodiments.

## Claims

1. A cell assembly, comprising:
a cell (100) comprising a cell body (110), wherein a first end surface (111) of the cell body (110) is arranged with an electrode post (120) protruding outward, and an insulating ring (130) is arranged between the first end surface (111) and the electrode post (120); and
a sealed insulating unit (200) comprising a sealed insulating cover (210) sealingly connected between the first end surface (111) and the electrode post (120) and covering the insulating ring (130).

2. The cell assembly according to claim 1, wherein the insulating ring (130) is annular surrounding the electrode post (120) and is embedded in the first end surface (111), and
in a radial direction (X) of the insulating ring (130), the sealed insulating cover (210) is sealingly connected to the cell (110) at an inner side and an outer side of the insulating ring (130), so that the sealed insulating cover (210) and the cell (110) form a sealed space (300) covering the insulating ring (130) together.

3. The cell assembly according to claim 2, wherein the sealed insulating cover (210) is sealingly connected to the first end surface (111) of the cell body (110) to form a continuous and annular outer sealing region (400) at the outer side of the insulating ring (130), and the sealed insulating cover (210) is sealingly connected to the electrode post (120) to form a continuous and annular inner sealing region (500) at the inner side of the insulating ring (130).

4. The cell assembly according to claim 3, wherein an end portion of the electrode post (120) protruding from the first end surface (111) is defined as a top end of the electrode post (120), and the sealed insulating cover (210) is sealingly connected to the top end of the electrode post (120) to form the inner sealing region (500).

5. The cell assembly according to claim 4, wherein the sealed insulating cover (210) is arranged with an avoidance through hole (211) near the top end of the electrode post (120), and the top end of the electrode post (120) is exposed through the avoidance through hole (211).

6. The cell assembly according to claim 3, wherein an end portion of the sealed insulating cover (210) near the first end surface (111) is defined as a bottom end of the sealed insulating cover (210), the sealed insulating cover (210) is arranged with a sealing flange (212) along an outer edge circumference of the bottom end, and both the sealing flange (212) and the bottom end of the sealed insulating cover (210) are sealingly connected to the first end surface (111) to form the outer sealing region (400).

7. The cell assembly according to claim 1, wherein the sealed insulating cover (210) is a high-temperature resistant structure.

8. The cell assembly according to claim 1, wherein the sealed insulating cover (210) is sealingly connected to the cell (100) through a high-temperature resistant connection layer.

9. The cell assembly according to claim 1, comprising at least two cells (100), wherein the sealed insulating unit (200) comprises at least two sealed insulating covers (210) and further comprises a connecting beam (220) connected to the at least two sealed insulating covers (210), the at least two sealed insulating covers (210) and the at least two cells (100) are arranged in one-to-one configuration.

10. The cell assembly according to claim 9, wherein the connecting beam (220) is connected to the first end surface (111) of the cell body (110).

11. The cell assembly according to claim 9, further comprising a current-collecting busbar (700), wherein the electrode post (120) is electrically connected to the current-collecting busbar (700), an insulating layer (600) is connected to a side of the current-collecting busbar (700) facing the cell body (110), and the sealed insulating cover (210) is connected to the insulating layer (600).

12. The cell assembly according to claim 11, wherein the insulating layer (600) and the sealed insulating cover (210) are configured as an integrally-formed structure.

13. The cell assembly according to claim 1, wherein the cell (100) comprises a cylindrical cell.

14. A battery module, comprising the cell assembly according to any one of claims 1-13.

15. A battery pack, comprising the cell assembly according to any one of claims 1-13.
